# EUROPÄISCHE PATENTSCHRIFT

(11) **EP 0 639 014 B1**
(45) Veröffentlichungstag und Bekanntmachung des Hinweises auf die Patenterteilung: **25.09.2002**
(21) Anmeldenummer: 94110547.0
(22) Anmeldetag: 07.07.1994
(51) Int. Cl.: H04L 12/56

(54) **Zugangskontrollverfahren für einen Pufferspeicher sowie Vorrichtung zum Zwischenspeichern von Datenpaketen und Vermittlungsstelle mit einer solchen Vorrichtung**
Access control method for a buffer store and apparatus for buffering data packets and switching node using said apparatus
Procédé à gérer l'accès à une mémoire tampon et dispositif de tamponnage de paquets de données et noeud de commutation en utilisant ledit dispositif

(30) Priorität: 13.07.1993 DE 4323405
(43) Veröffentlichungstag der Anmeldung: 15.02.1995
(73) Patentinhaber: ALCATEL, 75008 Paris (FR)
(72) Erfinder: Wippenbeck, Matthias, D-70193 Stuttgart (DE); Willmann, Gert, D-70184 Stuttgart (DE); Schrodi, Karl, D-71296 Heimsheim (DE)
(74) Vertreter: Brose, Gerhard, Dipl.-Ing.

(56) Entgegenhaltungen:
- EP-A- 0 272 939
- EP-A- 0 393 898
- IEEE JOURNAL ON SELECTED AREAS IN COMMUNICATIONS, Bd.9, Nr.9, Dezember 1991, US Seiten 1524 - 1536 A. Y.-M. LIN ET AL 'Priority Queuing Strategies and Buffer Allocation Protocols for Traffic Control at an ATM Integrated Broadband Switching System'
- PROCEEDINGS IEEE INFOCOM '90 - THE CONFERENCE ON COMPUTER COMMUNICATIONS. NINTH ANNUAL JOINT CONFERENCE OF THE IEEE COMPUTER AND COMMUNICATIONS SOCIETIES, LOS ALAMITOS, CA, US Seiten 1136 - 1143 'Comparative Peformance Study of Space Priority Mechanisms for ATM Networks'
- COMPUTER NETWORKS AND ISDN SYSTEMS, Bd.26, Nr.1, 1993, NL Seiten 95 - 108 J. F. MEYER ET AL 'Dimensioning of an ATM Switch with Shared Buffer and Threshold Priority'

## Beschreibung

Die Erfindung betrifft ein Zugangskontrollverfahren für einen Pufferspeicher nach dem Oberbegriff von Anspruch 1, eine Vorrichtung zum Zwischenspeichern von Datenpaketen nach dem Oberbegriff von Anspruch 5 sowie eine Vermittlungsstelle mit einer solchen Vorrichtung nach dem Oberbegriff von Anspruch 8.

Bei ATM-Vermittlungseinrichtungen (ATM = Asynchronous Transfer Mode) hat die Pufferung von Datenpaketen (dort auch Zellen genannt) große Bedeutung.

In ATM-Kommunikationsnetzen werden sowohl synchrone (genauer: isochrone) Daten, wie Sprache- oder Video-Daten, als auch asynchrone Daten, wie sie bei der Kommunikation zwischen Datenverarbeitungsanlagen auftreten, über die selben physikalischen Verbindungswege geleitet. Jeder dieser verschiedenen Datenübertragungsdienste hat dabei ganz andere Anforderungen an die Güte der Datenverbindung. So sind z.B. bei der Kommunikation zwischen Datenverarbeitungsanlagen erheblich geringere (Zell-) Verlustwahrscheinlichkeiten zugelassen als bei einer Sprachverbindung.

Daher ist es sinnvoll, Datenpaketen verschiedene Prioritätsklassen zuzuordnen und sie in den Vermittlungsstellen unterschiedlich zu behandeln. Dafür werden Zwischenspeicher benötigt, die, unter möglichst guter Ausnutzung des Speicherplatzes, Datenpaketen eine prioritätsabhängige obere Schranke der Verlustwahrscheinlichkeit garantieren.

In dem Artikel "Priority Queueing Strategies and Buffer Allocation Protocols for Traffic Control at an ATM Integrated Broadband Switching System" von Arthur Y.-M. Lin und John A. Silvester aus dem IEEE Journal on Selected Areas in Communications, Vol. 9, No. 9, December 1991, wird ein als "partial buffer sharing" bezeichnetes, gattungsgemäßes Zugangskontrollverfahren für einen Pufferspeicher beschrieben:

In einen Pufferspeicher werden Datenpakete, die jeweils einer von zwei Prioritätsklassen, einer hohen oder einer niedrigen, zugeordnet sind, gemeinsam gespeichert. Für jede Prioritätsklasse wird vor Inbetriebnahme des Puffers jeweils ein Schwellwert für den Vergleich mit dem Füllstand des Pufferspeichers festgelegt. Der Schwellwert für die hohe Prioritätsklasse ist auf einen Wert, der dem max. Füllstand des Pufferspeichers entspricht, festgelegt. Der Schwellwert für die niedrigere Prioritätsklasse wird aufgrund von verkehrstheoretischen Berechnungen auf einen Wert zwischen 0 und dem max. Füllstand des Pufferspeichers festgelegt.

Der Pufferspeicher ist als FIFO-Warteschlange (FIFO = First In First Out) organisiert. Es sind mehrere Ausleseeinrichtungen vorhanden, die jeweils ein Datenpaket vom unteren Ende der Warteschlange entnehmen. Am unteren Ende der Warteschlange befindet sich dabei dasjenige Datenpaket, das von allen Datenpaketen in der Warteschlange als erstes eingeschrieben wurde.

An dem Pufferspeicher kommen nach einem bestimmten Zufallsprozeß Datenpakete hoher und niedriger Priorität an. Mit diesen Datenpaketen wird nun wie folgt verfahren:
a) Handelt es sich um ein Datenpaket der hohen Prioritätsklasse und ist noch Platz im Pufferspeicher, so wird das Datenpaket am oberen Ende der Warteschlange eingereiht.
b) Handelt es sich um ein Datenpaket der niedrigeren Prioritätsklasse und liegt der Füllstand des Pufferspeichers unterhalb der durch den Schwellwert der niedrigeren Prioritätsklasse festgelegten Größe, so wird dieses Datenpaket ebenfalls am oberen Ende der Warteschlange eingereiht. In den übrigen Fällen wird das ankommende Datenpaket verworfen und geht so verloren.

Dieses Zugangskontrollverfahren führt dazu, daß nur ein Teil der Plätze im Pufferspeicher für die Datenpakete beider Prioritätsklassen nutzbar ist. Der Speicherbereich, der der Differenz zwischen dem max. Füllstand des Pufferspeichers und dem Schwellwert für die niedrigere Prioritätsklasse entspricht, ist für die Datenpakete der hohen Prioritätsklasse reserviert. Dadurch ergibt sich für diese Datenpakete eine niedrigere Verlustwahrscheinlichkeit als für die Datenpakete der niedrigeren Prioritätsklasse.

Dafür wird in Kauf genommen, daß der Pufferspeicher immer etwas schlechter ausgenützt wird als beim komplett gemeinsam benützten Puffer und sich somit die Gesamt-Verlustwahrscheinlichkeit etwas erhöht.

Will man für die Datenpakete der hohen Prioritätsklasse eine obere Grenze der Verlustwahrscheinlichkeit garantieren, so ergibt sich in vielen praktischen Anwendungsfällen jedoch eine Ausnützung des Pufferspeichers, die noch erheblich unter dem liegt, was durch diesen Effekt erklärbar ist.

In dem Artikel "Optimized Nested Threshold Cell Discarding for ATM Overload Control" von D. W. Petr et al, International Journal of Digital and Analog Communication Systems, Volume 5, Number 2, April-Juni 1992 wird ebenso ein solches "partial buffer sharing" Zugangskontrollverfahren für einen Pufferspeicher beschrieben, das dort als "nested threshold discarding" Verfahren bezeichnet wird. In diesem Artikel wird weiter ausgeführt, daß es möglich ist, Schwellwerte als Antwort auf sich verändernde Verkehrsbelastung zu ändern. Dies erfordert, die Verkehrsbelastung von vorneherein zu kennen oder zu messen. Der Erfindung liegt die Aufgabe zugrunde, diese beim "partial buffer sharing" in vielen Anwendungsfällen auftretende schlechte Ausnutzung des Pufferspeichers zu verbessern und so die Größe des benötigten Pufferspeichers zu reduzieren.

Diese Aufgabe wird gelöst durch ein Verfahren nach der Lehre des Anspruchs 1 sowie durch eine Vorrichtung nach der Lehre des Anspruchs 6. Eine vorteilhafte Anwendung ist dem Anspruch 9 zu entnehmen.

Die Erfindung baut auf der Erkenntis auf, daß die schlechte Ausnutzung des Pufferspeichers aus einem nicht optimal eingestellten Schwellwert für die niedrigere Prioritätsklasse resultiert. Der optimale Schwellwert hängt von den gestellten Anforderungen und der Verkehrscharakteristik des ankommenden und abgehenden Verkehrs ab. Diese kann aber meistens nicht vorausgesagt werden oder verändert sich im Lauf der Zeit. Deshalb wird der Schwellwert der niedrigeren Prioritätsklasse dynamisch geregelt und die Auslastung des Pufferspeichers damit optimiert.

Vorteilhafte Ausgestaltungen der Erfindung sind den Unteransprüchen zu entnehmen.

Im folgenden wird nun die Erfindung anhand von Ausführungsbeispielen unter Zuhilfenahme der beiliegenden Zeichnungen erläutert.
- Fig. 1: zeigt eine symbolische Darstellung einer ersten erfindungsgemäßen Vorrichtung zum Zwischenspeichern von Datenpaketen für ein erstes Ausführungsbeispiel.
- Fig. 2: zeigt eine symbolische Darstellung einer zweiten erfindungsgemäßen Vorrichtung zum Zwischenspeichern von Datenpaketen für ein zweites Ausführungsbeispiel.

In einem ersten Beispiel wird die Anwendung des erfindungsgemäßen Verfahrens in einer erfindungsgemäßen Vorrichtung zum Zwischenspeichern von Datenpaketen, die jeweils einer von zwei Prioritätsklassen angehören, aufgezeigt.

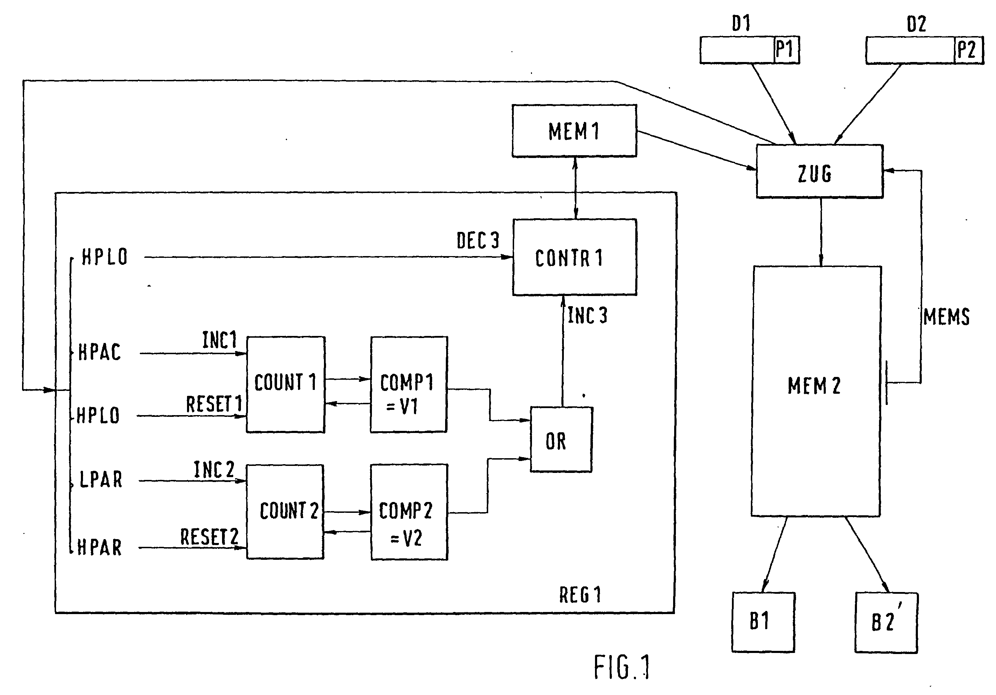

Fig. 1 weist eine Speichereinrichtung MEM1, einen Pufferspeicher MEM2, eine Zugangskontrolleinheit ZUG, zwei Ausleseeinrichtungen B1 und B2 und eine Regeleinrichtung REG1 auf.

Zwei Datenpakete D1 und D2 kommen an der Zugangskontrolleinheit ZUG an.

Die Zugangskontrolleinrichtung ZUG stellt der Regeleinrichtung REG1 mehrere Signale zur Verfügung und entscheidet darüberhinaus aufgrund von Daten, die Auskunft über den Füllstand MEMS des Pufferspeichers MEM2 geben, und Daten aus der Speichereinrichtung MEM1 darüber, ob sie ein ankommendes Datenpaket in den Pufferspeicher MEM2 einschreibt oder nicht. Die Datenpakete in dem Pufferspeicher MEM2 werden von den Ausleseeinrichtungen B1 und B2 aus dem Pufferspeicher MEM2 ausgelesen. Die Daten in der Speichereinrichtung MEM1 können von der Regeleinrichtung REG 1 gelesen und verändert werden.

Die Datenpakete D1 und D2 sind Datenpakete, wie sie in einem Kommunikationsnetz zum Austausch von Informationen verwendet werden. Sie tragen eine Kennung, die die Prioritätsklasse zeigt, der sie zugeordnet sind. Das Datenpaket D1 ist der Prioritätsklasse P1 und das Datenpaket D2 der Prioritätsklasse P2 zugewiesen. Hierbei entspricht P1 der höheren und P2 der niedrigeren Prioritätsklasse.

Darüberhinaus wäre es auch möglich, daß die Datenpakete D1 und D2 eine andere Form oder Verwendung hätten. So könnte z.B. ein solches Datenpaket den Prozeßkontext eines wartenden Prozesses in einer Datenverarbeitungsanlage darstellen.

Der Pufferspeicher MEM2 ist als FIFO-Warteschlange organisiert. Es wären jedoch auch andere Pufferungsprinzipien, wie z.B., daß kürzere Datenpakete zuerst ausgelesen werden, denkbar.

Der Füllstand MEMS des Pufferspeichers MEM2 ist ein Maß für die Anzahl der belegten Plätze in der Warteschlange. Er wird der Zugangskontrolleinrichtung mitgeteilt.

Die Speichereinrichtung MEM1 enthält zwei Schwellwerte, die der Zugangskontrolleinrichtung ZUG zum Vergleich mit dem Füllstand MEMS des Pufferspeichers MEM2 dienen. Der erste Schwellwert ist der höheren Prioritätsklasse P1 zugeordnet. Dieser Wert ist auf den max. Füllstand des Pufferspeichers MEM2 gelegt. Dies bedeutet, daß sobald der Füllstand MEMS des Pufferspeichers MEM2 diesen Wert erreicht hat, dieser Pufferspeicher voll ist.

Der zweite Schwellwert ist der niedrigeren Prioritätsklasse P2 zugeordnet. Er ist auf einen Wert zwischen dem Schwellwert, der der hohen Prioritätsklasse zugeordnet ist, und dem Wert, der einem leeren Pufferspeicher MEM2 entspricht, festgelegt. Dieser Schwellwert wird von der Regeleinrichtung REG1 dynamisch verändert.

Es wäre auch möglich, daß der erste Schwellwert geregelt würde. So könnte z.B. nicht benötigter Speicherplatz anderen Funktionseinheiten zur Verfügung gestellt werden.

Die Zugangskontrolleinrichtung ZUG empfängt die ankommenden Datenpakete und ermittelt die Prioritätsklasse, der diese Datenpakete jeweils zugeordnet sind. Anschließend vergleicht sie den Füllstand MEMS des Pufferspeichers MEM2 mit dem Schwellwert aus der Speichereinrichtung MEM1, der der Prioritätsklasse des entsprechenden Datenpaketes zugeordnet ist.

In diesem Beispiel vergleicht sie so für das Datenpaket D1 den ersten Schwellwert und für das Datenpaket D2 den zweiten Schwellwert mit dem Füllstand MEMS des Pufferspeichers MEM2.

Ist der Füllstand MEMS kleiner als der Schwellwert, wird das Datenpaket in den Pufferspeicher MEM2 eingetragen. Ist dies nicht der Fall, so wird es verworfen. Dies bedeutet für das Datenpaket D1, daß es nur verworfen wird, wenn der Pufferspeicher MEM2 voll ist. Das Datenpaket D2 wird schon früher verworfen, nämlich sobald der Füllstand MEMS den in der Speichereinheit MEM1 abgelegten zweiten Schwellwert erreicht hat.

Es sind daneben auch noch andere Verfahrensweisen denkbar: Z.B. könnte die Länge eines ankommenden Datenpakets in die Entscheidung mit eingehen.

Die Regeleinrichtung REG1 weist zwei Zähler COUNT1 und COUNT2, zwei Vergleicher COMP1 und COMP2, eine Steuereinrichtung CONTR1 und einen Oder-Verknüpfer OR auf.

Die Zähler COUNT1 und COUNT2 weisen jeweils einen Zähleingang INC1 bzw. INC2 und einen Rücksetzeingang RESET 1 bzw. RESET2 auf. Die Steuereinrichtung CONTR1 verändert den Schwellwert der niedrigen Prioritätsklasse P2 in der Speichereinrichtung MEM1. Sie weist zwei Eingänge DEC3 und INC3 auf. Bei einem Impuls am Eingang DEC3 erniedrigt sie den Schwellwert und bei einem Impuls am Eingang INC3 erhöht sie ihn. Liegen gleichzeitig Impulse an beiden Eingängen DEC3 und INC3 an, so wird der Schwellwert nicht verändert. Von der Zugangskontrolleinrichtung ZUG werden der Regeleinrichtung die Ereignistakt-Signale HPLO, HPAL, HPAR und LPAR zur Verfügung gestellt. Diese Signale übertragen Informationen in Form von Impulsen, die bestimmte Ereignisse beschreiben.

So wird bei den Ereignistakt-Signalen HPLO und HPAC ein Impuls erzeugt, wenn ein Datenpaket, das der hohen Prioritätsklasse P1 zugeordnet ist, verworfen bzw. in den Pufferspeicher MEM2 eingeschrieben wird. Damit ist durch diese beiden Signale die Verlustwahrscheinlichkeit der Datenpakete der Prioritätsklasse P1 in der gesamten Vorrichtung nach dem ersten Beispiel bestimmt.

Bei den Ereignistakt-Signalen HPAR und LPAR wird ein Impuls erzeugt, wenn ein Datenpaket der hohen Prioritätsklasse P1 bzw. ein Datenpaket der niedrigen Prioritätsklasse P2 an der Zugangskontrolleinrichtung ZUG ankommt. Das Ereignistakt-Signal HPAR ist so ein Maß für die Größe des ankommenden Verkehrs der hohen und das Ereignistakt-Signal LPAR für die der niedrigen Prioritätsklasse.

Das Ereignistakt-Signal HPLO steuert den Rücksetzeingang RESET1 und das Ereignistakt-Signal HPAC den Zähleingang INC des Zählers COUNT1 an. Bei einem Impuls am Zähleingang INC1 zählt der Zähler COUNT1 um eins nach oben. Bei einem Impuls am Rücksetzeingang RESET1 wird der Zähler COUNT1 gelöscht. Im Vergleicher COMP1 wird der Zählerstand des Zählers COUNT1 mit einem Vergleichswert V1 verglichen. Ist der Zählerstand größer als dieser Wert, so wird der Zähler COUNT1 gelöscht und ein Impuls über den ODER-Verknüpfer OR an den Zähleingang INC3 der Kontrolleinheit CONTR gesendet.

Das Ereignistakt-Signal LPAR steuert den Zähleingang INC2 und das Ereignistakt-Signal HPAR den Rücksetzeingang RESET2 des Zählers COUNT2 an. Bei einem Impuls am Zähleingang INC2 wird der Zähler COUNT2 um eins nach oben gezählt, bei einem am Rücksetzeingang RESET2 wird er gelöscht. Der Zählerstand wird im Vergleicher COMP2 mit einem Vergleichswert V2 verglichen. Wenn der Zählerstand größer als der Vergleichswert V2 ist, so wird der Zähler COUNT2 gelöscht und ein Impuls über den ODER-Verknüpfer OR an den Zähleingang INC3 der Steuereinrichtung CONTR1 gesendet.

Mit den beiden Vergleichswerten V1 und V2 wird die Verlustwahrscheinlichkeit der Datenpakete der hohen Prioritätsklasse eingestellt. Der Vergleichswert V1 ist hierzu in etwa auf den reziproken Wert der gewünschten Verlustwahrscheinlichkeit einzustellen und der Vergleichswert V2 in etwa auf ein Zehntel dieses Wertes.

Der Eingang DEC3 der Steuereinrichtung CONTR 1 wird von dem Ereignistakt-Signal HPLO angesteuert.

Damit ergibt sich folgende Funktionsweise der Regeleinrichtung REG1:

Die Ereignistakt-Signale HPLO und HPAC bestimmen die Verlustwahrscheinlichkeit der Datenpakete der hohen Prioritätsklasse P1. Bei Verlust eines solchen Datenpaketes wird der Schwellwert für die niedrige Prioritätsklasse erniedrigt. Gehen eine dem Vergleichswert V1 entsprechende Zahl von solchen Datenpaketen in Folge nicht verloren, so wird dieser Schwellwert erhöht. Damit schwingt sich der geregelte Schwellwert bei einem durch die Verlustwahrscheinlichkeit der Datenpakete der hohen Prioritätsstufe P1 bestimmten Wert ein.

Die Ereignistakt-Signale LPAR und HPAR bestimmen das Verkehrsverhältnis zwischen den ankommenden Datenpaketen der hohen und der niedrigen Prioritätsklasse. Bei einem hohen Verkehrsanteil der Datenpakete der niedrigen Prioritätsklasse, der sich dadurch zeigt, daß eine dem Vergleichswert V2 entsprechende Zahl von Datenpaketen der niedrigen Prioritätsklasse in Folge an der Zugangskontrolleinrichtung ZUG ankommt, wird der geregelte Schwellwert erhöht. Tritt jedoch gleichzeit der Verlust eines Patentpakets der hohen Prioritätsklasse P1 ein, so wird der geregelte Schwellwert nicht verändert.

Auf die zusätzliche Regelung mittels der Ereignistakt-Signale LPAR und HPAR könnte auch verzichtet werden. Sie verbessert nur die dynamischen Eigenschaften der Regeleinrichtung REG1 bei einem geringen Anteil von Datenpaketen der hohen Prioritätsklasse P1.

Dieses Beispiel zeigt die Regelung eines Schwellwertes bei einem Zwischenspeicher für Datenpakete, die jeweils einer von zwei Prioritätsklassen angehören.

Es wäre auch möglich, die Vorrichtung nach dem ersten Beispiel für Datenpakete, die jeweils einer von mehr als zwei Prioritätsklassen angehören, auszudehen. Hierfür müßten in der Speichereinrichtung MEM1 entsprechend mehr Schwellwerte abgelegt sein, die dann jeweils von einer Regeleinrichtung, die wie die Regeleinrichtung REG1 aufgebaut wäre, verändert würden.

Es wäre darüberhinaus auch denkbar, in diesem Fall auch nur einen Schwellwert dynamisch zu regeln.

In einem zweiten Beispiel wird ebenfalls die Anwendung des erfindungsgemäßen Verfahrens in einer erfindungsgemäßen Vorrichtung zum Zwischenspeichern von Datenpaketen aufgezeigt.

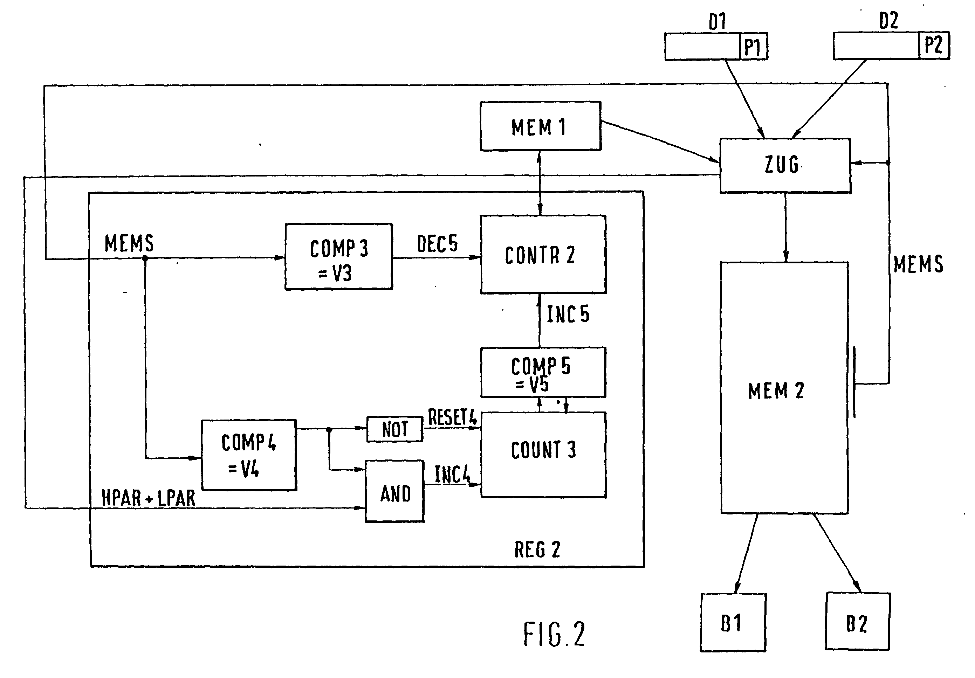

Fig. 2 weist eine Speichereinrichtung MEM1, einen Pufferspeicher MEM2, eine Zugangskontrolleinrichtung ZUG, zwei Ausleseeinrichtungen B1 und B2, eine Regeleinrichtung REG2 und zwei ankommende Datenpakete D1 und D2 auf.

Die Vorrichtung nach dem zweiten Beispiel ist bis auf die Regeleinrichtung gleich aufgebaut wie die nach dem ersten Beispiel. Deshalb wird hier nur die Funktionsweise der Regeleinrichtung REG2 erläutert.

Die Regeleinrichtung REG2 weist einen Zähler COUNT3, drei Vergleicher COMP3, COMP4, COMP5, einen Negierer NOT, einen Und-Verknüpfer AND und eine Steuereinrichtung CONTR2 auf. Der Zähler COUNT3 weist einen Zähleingang INC4 und einen Rücksetzeingang RESET4 auf. Die Steuereinrichtung CONTR2 weist zwei Eingänge DEC5 und INC5 auf.

Als Eingangsdaten stehen der Regeleinrichtung REG2 der Füllstand MEMS des Pufferspeichers sowie ein Ereignistakt-Signal HPAR+LPAR zur Verfügung. Dieses Signal übermittelt Informationen in Form von Impulsen, die jedesmal dann von der Zugangskontrolleinrichtung ZUG erzeugt werden, wenn ein Datenpaket der hohen oder der niedrigen Prioritätsklasse ankommt.

Anstelle des Ereignistakt-Signals HPAR+LPAR könnte hier auch ein Zeittakt-Signal, das von einer Uhr stammt, verwendet werden.

Der Füllstand MEMS wird im Vergleicher COMP3 mit dem Vergleichswert V3 verglichen. Übersteigt der Füllstand MEMS den Vergleichswert V3, so wird über den Eingang DEC5 die Steuereinrichtung CONTR2 veranlaßt, den geregelten Schwellwert in der Speichereinrichtung MEM1 herabzusetzen. Im Vergleicher COMP4 wird der Füllstand MEMS mit dem Vergleichswert V4 verglichen. Ist der Füllstand MEMS größer als der Vergleichswert V4, so wird über den Negierer NOT der Zähler COUNT3 gelöscht. Ist er kleiner oder gleich, so wird der Zähler COUNT3 bei jedem Impuls am Zähleingang INC4 um eins nach oben gesetzt. Dieser Eingang wird vom Ereignistakt-Signal HPAR+LPAR angesteuert. Der Zählerstand des Zählers COUNT3 wird mit dem Vergleichswert V5 verglichen. Sobald der Zählerstand den Vergleichswert V5 übersteigt, wird der Zähler gelöscht und die Steuereinrichtung CONTR2 über den Eingang INC5 veranlaßt, den geregelten Schwellwert zu erhöhen.

Durch die drei Vergleichswerte V3, V4 und V5 wird die Verlustwahrscheinlichkeit der Datenpakete der hohen Prioritätsklasse bestimmt. Bei der Wahl der beiden Vergleichswerte V3 und V4 ergibt sich die Einschränkung, daß V3 größer als V4, jedoch kleiner als der maximale Füllstand des Pufferspeichers zu sein hat. Bei einer Speicherkapazität des Pufferspeichers MEM2 von 16 Datenpaketen, einer negativ-exponentiellen Verkehrscharakteristik der Datenpakete und einer Variation des Verkehrsanteils der hochpriorisierten Datenpakete zwischen 25% und 50%, wird für eine Verlustwahrscheinlichkeit von z.B. 2x10⁻⁵ hierzu der Vergleichswert V3 in etwa auf 12, der Vergleichswert V4 in etwa auf 6 und der Vergleichswert V5 in etwa auf 100 gesetzt.

Beim zweiten Beispiel wird so der geregelte Schwellwert erniedrigt, wenn der Füllstand MEMS eine erste Schwelle, die dem Vergleichswert V3 entspricht, übersteigt. Sie wird erhöht, wenn der Füllstand MEMS während der Ankunft einer dem Vergleichswert V5 entsprechenden Anzahl von Datenpaketen in Folge unterhalb einer zweiten Schwelle, die dem Vergleichswert V4 entspricht, bleibt.

In einem dritten Beispiel wird eine vorteilhafte Anwendung des erfindungsgemäßen Verfahrens in einer ATM-Vermittlungsstelle aufgezeigt.

In einer solchen Vermittlungsstelle werden die ankommenden Datenpakete bevor, nachdem oder während sie durch eine Koppeleinrichtung vermittelt werden, zwischengespeichert. Damit wird für jede Leitung, auf der Datenpakete ankommen bzw. abgehen, ein Zwischenspeicher benötigt. An diesen Stellen werden nun erfindungsgemäße Vorrichtungen zum Zwischenspeichern von Datenpaketen eingesetzt. Dies hat den Vorteil, daß so den Datenpaketen einer höheren Prioritätsklasse eine obere Schranke der Verlustwahrscheinlichkeit garantiert werden kann.

## Patentansprüche

1. Zugangskontrollverfahren für einen Pufferspeicher (MEM2), in dem Datenpakete (D1, D2), die jeweils einer von mindestens zwei Prioritätsklassen (P1, P2) zugeordnet sind, gemeinsam gespeichert werden, bei dem jeder Prioritätsklasse (P1, P2) ein Schwellwert für einen Vergleich mit dem Füllstand (MEMS) des Pufferspeichers (MEM2) zugeordnet ist und der Schwellwert einer höheren Prioritätsklasse (P1) größer oder gleich dem einer niedrigeren (P2) ist, bei dem die Prioritätsklasse (P1, P2) eines am Pufferspeicher (MEM2) ankommenden Datenpaketes (D1, D2) und der Füllstand (MEMS) des Pufferspeichers (MEM2) zum Ankunftszeitpunkt des Datenpaketes (D1, D2) ermittelt wird, und bei dem der Füllstand (MEMS) mit dem Schwellwert, der der Prioritätsklasse (P1, P2) des Datenpaketes (D1, D2) zugeordnet ist, verglichen wird und mittels dieses Vergleichs darüber entschieden wird, ob das Datenpaket (D1, D2) in den Pufferspeicher (MEM2) eingeschrieben oder ob es verworfen wird,
**dadurch gekennzeichnet, daß** für die Regelung mindestens eines der Schwellwerte die Verlustwahrscheinlichkeit von Datenpaketen (D1, D2) einer oder mehrerer Prioritätsklassen (P1, P2) ermittelt wird und daß mittels der Auswertung der ermittelten Verlustwahrscheinlichkeit von Datenpaketen (D1, D2) einer oder mehrerer Prioritätsklassen (P1, P2) mindestens einer der Schwellwerte dynamisch geregelt wird.

2. Verfahren nach Anspruch 1,
**dadurch gekennzeichnet, daß** für die Ermittlung der Verlustwahrscheinlichkeit von Datenpaketen (D1, D2) einer oder mehrerer Prioritätsklassen (P1, P2) die beiden Ereignisse, nämlich daß ein Datenpaket (D1, D2) in den Pufferspeicher (MEM2) eingeschrieben wird und daß ein Datenpaket (D1, D2) verworfen wird, ermittelt und gezählt werden.

3. Verfahren nach Anspruch 1,
**dadurch gekennzeichnet, daß** für die Ermittlung der Verlustwahrscheinlichkeit von Datenpaketen (D1, D2) einer oder mehrerer Prioritätsklassen (P1, P2) der jeweilige Füllstand (MEMS) des Pufferspeichers (MEM2) zu verschiedenen Zeitpunkten ermittelt wird.

4. Verfahren nach Anspruch 1,
**dadurch gekennzeichnet, daß** für die Regelung mindestens eines Schwellwerts weiter der, durch Datenpakete (D1, D2) einer oder mehrerer Prioritätsklassen (P1, P2) verursachte, ankommende Verkehr quantitativ ermittelt und zusätzlich für die dynamische Regelung des mindestens einen Schwellwerts ausgewertet wird.

5. Verfahren nach Anspruch 4,
**dadurch gekennzeichnet, daß** für die Ermittlung des, durch Datenpakete (D1, D2) einer oder mehrerer Prioritätsklassen (P1, P2) verursachten, ankommenden Verkehrs das Ereignis, daß ein Datenpaket (D1, D2) am Pufferspeicher (MEM2) ankommt, ermittelt und gezählt wird.

6. Vorrichtung zum Zwischenspeichern von Datenpaketen (D1, D2), die jeweils einer von mindestens zwei Prioritätsklassen (P1, P2) zugeordnet sind, mit einer ersten Speichereinrichtung (MEM1), die so ausgestaltet ist, daß sie für jede Prioritätsklasse (P1, P2) Daten über einen Schwellwert bereithält, mit einer zweiten Speichereinrichtung (MEM2), die als Pufferspeicher dient, mit einer Zugangskontrolleinrichtung (ZUG), die so ausgestaltet ist, daß sie Datenpakete (D1, D2) empfangen und in die zweite Speichereinrichtung (MEM2) eintragen kann, und die so ausgestaltet ist, daß sie mittels der Daten aus der ersten Speichereinrichtung (MEM1) und mittels Daten über den Füllstand (MEMS) der zweiten Speichereinrichtung (MEM2) darüber entscheidet, ob sie ankommende Datenpakete (D1, D2) in die zweite Speichereinrichtung (MEM2) einträgt oder ob sie sie verwirft, und mit einer oder mehreren Ausleseeinrichtungen (B1, B2) zum Auslesen von Datenpaketen (D1, D2) aus der zweiten Speichereinrichtung (MEM2),
**dadurch gekennzeichnet, daß** die erste Speichereinrichtung (MEM1) so ausgestaltet ist, daß Daten in ihr gelesen und verändert werden können und daß die Vorrichtung mit einer Regeleinrichtung (REG1; REG2) versehen ist, die so ausgestaltet ist, daß sie für die Regelung mindestens eines Schwellwerts die Verlustwahrscheinlichkeit von Datenpaketen (D1, D2) einer oder mehrerer Prioritätsklassen (P1, P2) ermittelt und daß sie mittels der Auswertung der ermittelten Verlustwahrscheinlichkeit von Datenpaketen (D1, D2) einer oder mehrerer Prioritätsklassen (P1, P2) die Daten in der ersten Speichereinrichtung (MEM1) dynamisch verändert.

7. Vorrichtung nach Anspruch 6,
**dadurch gekennzeichnet, daß** die Regeleinrichtung (REG1; REG2) mit einem Eingang für mindestens ein Zeittakt-Signal versehen ist.

8. Vorrichtung nach Anspruch 6,
**dadurch gekennzeichnet, daß** die Zugangskontrolleinrichtung (ZUG) so ausgestaltet ist, daß sie mindestens ein Ereignistakt-Signal (HPLO, HPAC, LPAR, HPAR; HPAR + LPAR), das aus der Ankunft oder dem Verwerfen von Datenpaketen (D1, D2) ermittelt wird, erzeugt und daß die Regeleinrichtung (REG1; REG2) mit einem Eingang für mindestens ein solches Ereignistakt-Signal (HPLO, HPAC, LPAR, HPAR; HPAR + LPAR) versehen ist.

9. Vermittlungsstelle für ein Kommunikationsnetz zum Transportieren von Datenpaketen (D1, D2), die jeweils einer von mindestens zwei Prioritätsklassen (P1, P2) zugeordnet sind, mit mindestens einer Vorrichtung zum Zwischenspeichern der Datenpakete (D1, D2), die mit einer ersten Speichereinrichtung (MEM1), die so ausgestaltet ist, daß sie für jede Prioritätsklasse (P1, P2) Daten über einen Schwellwert bereithält, mit einer zweiten Speichereinrichtung (MEM2), die als Pufferspeicher dient, mit einer Zugangskontrolleinrichtung (ZUG), die so ausgestaltet ist, daß sie Datenpakete (D1, D2) empfangen und in die zweite Speichereinrichtung (MEM2) eintragen kann und die mittels der Daten aus der ersten Speichereinrichtung (MEM1) und mittels Daten über den Füllstand (MEMS) der zweiten Speichereinrichtung (MEM2) darüber entscheidet, ob sie ankommende Datenpakete (D1, D2) in die zweite Speichereinrichtung (MEM2) einträgt oder ob sie sie verwirft, und mit einer oder mehreren Ausleseeinrichtungen (B1, B2) zum Auslesen von Datenpaketen (D1, D2) aus der zweiten Speichereinrichtung (MEM2) versehen ist,
**dadurch gekennzeichnet, daß** die erste Speichereinrichtung (MEM1) so ausgestaltet ist, daß Daten in ihr gelesen und verändert werden können und daß die Vorrichtung mit einer Regeleinrichtung (REG1; REG2) versehen ist, die so ausgestaltet ist, daß sie für die Regelung mindestens eines Schwellwerts die Verlustwahrscheinlichkeit von Datenpaketen (D1, D2) einer oder mehrerer Prioritätsklassen (P1, P2) ermittelt und daß sie mittels der Auswertung der ermittelten Verlustwahrscheinlichkeit von Datenpaketen (D1, D2) einer oder mehrerer Prioritätsklassen (P1, P2) die Daten in der ersten Speichereinrichtung (MEM1) dynamisch verändert.

## Claims

1. Access control method for a buffer memory (MEM2) in which data packets (D1, D2) each assigned to one of at least two priority classes (P1, P2) are jointly stored, in which a threshold value for a comparison with the occupancy level (MEMS) of the buffer memory (MEM2) is assigned to each priority class (P1, P2) and the threshold value of a higher priority class (P1) is greater than or equal to that of a lower priority class (P2), in which the priority class (P1, P2) of a data packet (D1, D2) arriving at the buffer memory (MEM2) and the occupancy level (MEMS) of the buffer memory (MEM2) is determined at the time of arrival of the data packet (D1, D2), and in which the occupancy level (MEMS) is compared with the threshold value that is assigned to the priority class (P1, P2) of the data packet (D1, D2) and, by means of said comparison, a decision is made as to whether the data packet (D1, D2) is written into the buffer memory (MEM2) or whether it is discarded, **characterized in that** the loss probability of data packets (D1, D2) of one or more priority classes (P1, P2) is determined for the regulation of at least one of the threshold values, and **in that** at least one of the threshold values is dynamically regulated by means of the evaluation of the loss probability of data packets (D1, D2) determined for one or more priority classes (P1, P2).

2. Method according to Claim 1, **characterized in that** the two events, namely that a data packet (D1, D2) is written into the buffer memory (MEM2) and that a data packet (D1, D2) is discarded, are determined and counted to determine the loss probability of data packets (D1, D2) of one or more priority classes (P1, P2).

3. Method according to Claim 1, **characterized in that** the respective occupancy level (MEMS) of the buffer memory (MEM2) is determined at different times to determine the loss probability of data packets (D1, D2) of one or more priority classes (P1, P2).

4. Method according to Claim 1, **characterized in that** the incoming traffic due to data packets (D1, D2) of one or more priority classes (P1, P2) is furthermore determined quantitatively for the regulation of at least one threshold value and is additionally evaluated for the dynamic regulation of the at least one threshold value.

5. Method according to Claim 4, **characterized in that** the event that a data packet (D1, D2) arrives at the buffer memory (MEM2) is determined and counted to determine the incoming traffic due to data packets (D1, D2) of one or more priority classes (P1, P2).

6. Device for the temporary storage of data packets (D1, D2) that are each assigned to one of at least two priority classes (P1, P2), comprising a first memory device (MEM1) that is configured in such a way that it holds in store data relating to a threshold value for each priority class (P1, P2), comprising a second memory device (MEM2) that serves as buffer memory, comprising an access control device (ZUG) that is configured in such a way that it can receive data packets (D1, D2) and enter them into the second memory device (MEM2) and that is configured in such a way that, by means of the data from the first memory device (MEM1) and by means of data relating to the occupancy level (MEMS) of the second memory device (MEM2), it decides whether it enters incoming data packets (D1, D2) into the second memory device (MEM2) or whether it discards them, and comprising one or more read-out devices (B1, B2) for reading data packets (D1, D2) out of the second memory device (MEM2), **characterized in that** the first memory device (MEM1) is configured in such a way that data in it can be read and altered and **in that** the device is provided with a regulating device (REG1; REG2) that is configured in such a way that it determines the loss probability of data packets (D1, D2) of one or more priority classes (P1, P2) for the regulation of at least one threshold value, and **in that** it dynamically alters the data in the first memory device (MEM1) by means of the evaluation of the loss probability of data packets (D1, D2) determined for one or more priority classes (P1, P2).

7. Device according to Claim 6, **characterized in that** the regulating device (REG1; REG2) is provided with an input for at least one clock signal.

8. Device according to Claim 6, **characterized in that** the access control device (ZUG) is configured in such a way that it generates at least one event timing signal (HPLO, HPAC, LPAR, HPAR; HPAR + LPAR) that is determined from the arrival or the discarding of data packets (D1, D2) and **in that** the regulating device (REG1; REG2) is provided with an input for at least one such event timing signal (HPLO, HPAC, LPAR, HPAR; HPAR + LPAR).

9. Switching centre for a communications network for transporting data packets (D1, D2) that are each assigned to one of at least two priority classes (P1, P2), comprising at least one device for the temporary storage of data packets (D1, D2), that is provided with a first memory device (MEM1) that is configured in such a way that it holds in store data relating to a threshold value for each priority class (P1, P2), with a second memory device (MEM2) that serves as buffer memory, with an access control device (ZUG) that is configured in such a way that it can receive data packets (D1, D2) and can enter them into the second memory device (MEM2) and that decides by means of the data from the first memory device (MEM1) and by means of the data relating to the occupancy level (MEMS) of the second memory device (MEM2), whether it enters incoming data packets (D1, D2) in the second memory device (MEM2) or whether it discards them, and with one or more read-out devices (B1, B2) for reading data packets (D1, D2) out of the second memory device (MEM2), **characterized in that** the first memory device (MEM1) is configured in such a way that data in it can be read and altered and **in that** the device is provided with a regulating device (REG1; REG2) that is configured in such a way that it determines the loss probability of data packets (D1, D2) of one or more priority classes (P1, P2) for the regulation of at least one threshold value and that it dynamically alters the data in the first memory device (MEM1) by means of the evaluation of the loss probability of data packets (D1, D2) determined for one or more priority classes (P1, P2).

## Revendications

1. Procédé destiné à gérer l'accès à une mémoire tampon (MEM2), dans laquelle sont classés et stockés des paquets de données (D1, D2) qui correspondent respectivement à au moins deux classes de priorité (P1, P2) et pour lequel une valeur de seuil destinée à établir la comparaison avec le niveau de remplissage (MEMS) de la mémoire tampon (MEM2) est associée à chaque classe de priorité (P1, P2) et où la valeur de seuil d'une classe de priorité haute (P1) est supérieure ou égale à la valeur de seuil d'une priorité basse (P2) et pour lequel la classe de priorité (P1, P2) d'un paquet de données entrant (D1, D2) dans la mémoire tampon (MEM2) et le niveau de remplissage (MEMS) de la mémoire tampon (MEM2) sont déterminés au moment de l'arrivée du paquet de données (D1, D2) et pour lequel le niveau de remplissage (MEMS) est comparé à la valeur de seuil qui est associée à la classe de priorité (P1, P2) du paquet de données (D1, D2), la dite comparaison permettant de déterminer si le paquet de données (D1, D2) doit être inscrit dans la mémoire tampon (MEM2) ou s'il doit être rejeté, **caractérisé en ce que** pour le réglage d'au moins une des valeurs de seuil, la probabilité de perte des paquets de données (D1, D2) d'une ou de plusieurs classes de priorité (P1, P2) est déterminée et que grâce à l'évaluation de la probabilité de perte des paquets de données (D1, D2) ayant une ou plusieurs classes de priorité (P1, P2) au minimum une valeur de seuil est réglée de façon dynamique.

2. Procédé selon la revendication 1, **caractérisé en ce que** pour la transmission de la probabilité de perte des paquets de données (D1, D2) d'une ou de plusieurs classes de priorité (P1, P2), les deux événements, c'est-à-dire l'inscription d'un paquet de données (D1, D2) dans la mémoire tampon (MEM2) et le rejet d'un paquet de données (D1, D2) sont déterminés et comptabilisés.

3. Procédé selon la revendication 1, **caractérisé en ce que** pour la transmission de la probabilité de perte des paquets de données (D1, D2) d'une ou de plusieurs classes de priorité (P1, P2), le niveau de remplissage correspondant (MEMS) de la mémoire tampon (MEM2) est transmis à différents moments.

4. Procédé selon la revendication 1, **caractérisé en ce que** pour le réglage d'au moins une valeur de seuil, le trafic arrivant ayant pour origine des paquets de données (D1, D2) d'une ou de plusieurs classes de priorité (P1, P2) est déterminé quantitativement et de plus évalué pour le réglage dynamique d'au moins une valeur de seuil.

5. Procédé selon la revendication 4, **caractérisé en ce que** pour la transmission du trafic arrivant ayant pour origine des paquets de données (D1, D2) d'une ou de plusieurs classes de priorité (P1, P2), l'événement consistant en l'arrivée dans la mémoire tampon (MEM2) d'un paquet de données (D1, D2) est déterminé et comptabilisé.

6. Dispositif pour le tamponnage de paquets de données (D1, D2) qui sont chacun associés à au moins une des deux classes de priorité (P1, P2) avec un premier organe de mémoire (MEM1) qui est structuré de telle sorte qu'il tient prêt, au moyen d'une valeur de seuil, des données pour chaque classe de priorité (P1, P2), avec un deuxième organe de mémoire (MEM2) qui sert de mémoire tampon, avec une unité de gestion d'accès (ZUG) qui est structurée de telle sorte qu'elle est en mesure de recevoir des paquets de données (D1, D2) et de les entrer dans le deuxième organe de mémoire (MEM2) et que celle-ci est structurée de telle sorte qu'elle peut décider, au moyen des données provenant du premier organe de mémoire (MEM1) et au moyen des données concernant le niveau de remplissage (MEMS) du deuxième organe de mémoire (MEM2), si elle saisit dans le deuxième organe de mémoire (MEM2) les paquets de données entrants (D1, D2) ou si elle les rejette, et avec un ou plusieurs dispositifs de triage (B1, B2) permettant d'effectuer le tri des paquets de données (D1, D2) provenant du deuxième organe de mémoire (MEM2), **caractérisé en ce que** le premier organe de mémoire (MEM1) est structuré de telle sorte que les données peuvent être lues et modifiées à l'intérieur de la dite mémoire et que le dispositif est prévu avec un système de réglage (REG1 ; REG2) qui est structuré de telle sorte qu'il transmet pour le réglage d'au moins une valeur de seuil, la probabilité de perte des paquets de données (D1, D2) d'une ou de plusieurs classes de priorité (P1, P2) et que, au moyen de l'évaluation de la probabilité de perte transmise des paquets de données (D1, D2) d'une ou de plusieurs classes de priorité (P1, P2), il modifie de façon dynamique les données dans le premier organe de mémoire (MEM1).

7. Dispositif selon la revendication 6, **caractérisé en ce que** le système de réglage (REG1 ; REG2) est prévu avec une entrée pour au moins un signal de cycle événementiel.

8. Dispositif d'après la revendication 6, **caractérisé en ce que** l'unité de gestion d'accès (ZUG) est structurée de telle sorte qu'elle génère au minimum un signal de cycle événementiel (HPLO, HPAC, LPAR, HPAR, HPAR + LPAR) qui est transmis à l'arrivée ou au rejet de paquets de données (D1, D2) et que le système de réglage (REG1 ; REG2) est prévu avec une entrée pour au moins un tel signal de cycle événementiel (HPLO, HPAC, LPAR, HPAR, HPAR + LPAR).

9. Centre de commutation pour un réseau de communication destiné au transport de paquets de données (D1, D2) qui sont chacun associés à au moins une des deux classes de priorité (P1, P2) avec au moins un dispositif pour le tamponnage des paquets de données (D1, D2), dispositif qui est muni d'un premier organe de mémoire (MEM1) qui est structuré de telle sorte, qu'au moyen d'une valeur de seuil, il tient prêt des données pour chaque classe de priorité (P1, P2), avec un deuxième organe de mémoire (MEM2) qui sert de mémoire tampon, avec une unité de gestion d'accès (ZUG) qui est structurée de telle sorte qu'elle peut recevoir des paquets de données (D1, D2) et les saisir dans le deuxième organe de mémoire (MEM2) et qui, au moyen des données provenant du premier organe de mémoire (MEM1) et des données concernant le niveau de remplissage (MEMS) du deuxième organe de mémoire (MEM2), décide si elle saisit dans le deuxième organe de mémoire (MEM2) les paquets de données entrants (D1, D2) ou si elle les rejette, et qui est prévue avec un ou plusieurs dispositifs de triage (B1, B2) permettant d'effectuer le tri des paquets de données (D1, D2) provenant du deuxième organe de mémoire (MEM2), **caractérisé en ce que** le premier organe de mémoire (MEM1) est structuré de telle sorte que les données peuvent être lues et modifiées à l'intérieur de la dite mémoire et que le dispositif est prévu avec un système de réglage (REG1 ; REG2) qui est structuré de telle sorte qu'il transmet pour le réglage d'au moins une valeur de seuil, la probabilité de perte des paquets de données (D1, D2) d'une ou de plusieurs classes de priorité (P1, P2) et que, au moyen de l'évaluation de la probabilité de perte transmise des paquets de données (D1, D2) d'une ou de plusieurs classes de priorité (P1, P2) il modifie de façon dynamique les données dans le premier organe de mémoire (MEM1).
